# EUROPEAN PATENT SPECIFICATION

(11) **EP 3 600 707 B1**
(45) Date of publication and mention of the grant of the patent: **23.06.2021**
(21) Application number: 18725897.5
(22) Date of filing: 23.04.2018
(51) Int. Cl.: B09B 3/00, B01D 45/00, B01D 45/08, B01D 45/10, F23G 5/00, F23G 5/027, F23G 5/12, B01D 47/00, B01D 47/06

(54) **MATERIAL RECYCLING APPARATUS**
VORRICHTUNG FÜR MATERIAL-RECYCLING
APPAREIL DE RECYCLAGE DE MATÉRIAU

(30) Priority: 24.04.2017 GB 201706489; 20.06.2017 GB 201709856
(43) Date of publication of application: 05.02.2020
(73) Proprietor: Manik Ventures Limited, Abbots Morton, Worcestershire WR7 4NA (GB)
(72) Inventor: SPENCER, Nik, Abbots Morton Worcestershire WR7 4NA (GB); JOUHARA, Hussam, Manchester Greater Manchester M14 7DT (GB)
(74) Representative: Downing, Michael Philip
(86) International application number: PCT/GB2018/051052
(87) International publication number: WO 2018/197843

(56) References cited:
- WO-A1-2015/104400
- CN-A- 104 874 249
- GB-A- 2 443 202
- US-A- 3 357 378
- US-A- 3 773 308
- US-A- 4 338 103
- US-B1- 7 530 552

## Description

### FIELD OF THE INVENTION

The present invention relates to apparatus for recycling material. It can be used for a range of materials, including (but not limited to) end-of life items and waste or refuse from domestic dwellings and commercial establishments.

### BACKGROUND ART

The domestic households of the United Kingdom collectively generate approximately 30 million tonnes of waste per year. Typically, 40% of this is recyclable - such as paper, cardboard, glass, cans plastics and (in some cases) green waste and food waste. This waste is collected from the majority of households via a kerbside type collection scheme operated by or on behalf of local government bodies. Existing UK practice is to require householders to divide waste into separate containers for the various types of recyclable waste, to allow these to be harvested with the remainder being classed as residual waste. The waste is collected either weekly or fortnightly, and the residual waste is either landfilled or sent to large scale Energy from Waste plants to generate electricity.

The current approach is that waste is collected in Refuse Collection Vehicles (RCV) and disposed of through large-scale Energy from Waste (EfW) incinerators or Mass Burn Incinerators (MBI). These can process circa 200k to 300k tonnes of waste per annum. These MBIs use existing proven technology which makes them attractive to the financial markets to fund the capital cost of the plant when combined with long term waste disposal contracts with the County Councils who are responsible for the disposal and treatment of waste generated by their residents.

Commercial establishments also encounter a range of leftover items such as packaging materials and end-of-life materials. At present these need to be disposed of as waste, but it would be preferable to obtain value from these materials.

On the fringes there are alternative thermal treatment technologies emerging, such as gasification, pyrolysis and plasma, which effectively break down the waste to a synthesised gas (Syngas) and fuel product. The gas and oil can then be utilised to run electrical generating equipment. These technologies are still in their relative infancy but do have substantial environmental benefits; they are cleaner than the conventional incinerators and although smaller than MBIs their capacity is still substantial, circa 15k to 30k tonnes per annum. However, it is not yet clear that these units will be able to scale their capacity up to a commercially viable size.

Our earlier application WO2015/104400A1 proposed an alternative arrangement, that instead of seeking to scale up the alternative thermal treatment technologies, they should be scaled down in order to provide a unit small enough to be accommodated near to or even within the domestic or commercial premises that is generating the material. This would avoid the need for the material to be disposed of as waste, thus removing the need for fleets of RCVs, avoid the planning difficulties inherent in finding locations for large waste processing plants, and allow the syngas and other pyrolysis products to be used to heat the premises in question. Our application proposed a design for such a unit.

CN104874249 discloses a baffle type tail gas environmental protection processing device for a coal-fired or other type of boiler, with a plurality of staggered baffles that deflect a water flow into curtains through which the flue gas must pass. The water is collected and re-used.

### SUMMARY OF THE INVENTION

The thermal treatment techniques are very clean, and the byproducts consist mainly of the metal content of the input material, which can be recycled in the usual way, and a fine ash that is sufficiently inert to be disposed of in the premises' waste water outlet. However, the high temperature at which the process takes place and the need to exhaust the atmosphere within the treatment chamber means that some of that ash will become entrained in the exhaust air plume, i.e. as smoke.

The present invention therefore provides a materials recycling apparatus comprising a heat treatment chamber for processing the material at an elevated temperature, the chamber having a vent for exhaust air produced by the heat treatment which leads via a heat exchanger to a scrubber comprising a non-straight flow path, at least one spray nozzle directed towards the non-straight flow path, and a supply of fluid to the or each spray nozzle, thereby to remove byproducts of the heat treatment from the exhaust air plume. In this way, the entrained ash or other non-gaseous material such as oils can be efficiently removed from the exhaust air, allowing it to be vented, and the captured ash or oils etc. disposed of via a waste water outlet together with other washed discharges (e.g. ash, char or oils).

The scrubber works more effectively when the temperature of the exhaust plume is below around 100 °C, and preferably between about 25 and 35 °C. Thus, before it reaches the scrubber the exhaust plume is passed through a heat exchanger, i.e. an element capable of removing heat from the exhaust plume by transferring (or exchanging) it to another media. Preferred forms of the heat exchanger can provide a synergistic effect in that they both cool the plume and also extract energy that can be used for other purposes rather than being wasted in heating waste water produced by the scrubber. For example, the heat exchanger could be a radiator and the useful energy could be used for space heating. Alternatively, the heat exchanger could deliver the heat to a supply of hot water for the premises, either for sanitary use or for space heating purposes. The heat exchanger could alternatively be a direct or any other indirect contact heat exchanger.

The flow path can be disrupted to make it non-straight by at least one baffle plate. This can be placed in a position which interrupts the flow path, forcing the flow to divert around the baffle plate. At this point, the flow speed will be reduced, so we prefer that the spray nozzle is located ahead of the baffle plate. Ideally, the flow path is disrupted by several baffle plates, such as two or three, and a spray nozzle is located ahead of (such as above and in front of) each baffle plate. These can be arranged to define a circuitous path around the baffle plates which the airflow must follow.

Some thought should be given to allowing escape of the fluid sprayed by the spray nozzles. This can be assisted by spacing the lower edge of each baffle plate from the floor section of the scrubber, along at least a part of that edge. Fluid will then be able to flow past the baffle plates to escape via (for example) a drain outlet. To prevent these spaces allowing an alternative flow path for the air, the drain can be set at a level which is a preset distance above the internal level of the floor, and the lower edges of the baffles spaced from the floor by distances that are alternately greater than and less than the preset distance, with the baffles whose lower edges are spaced from the floor by less than the preset distance having an upper edge that is spaced from a roof section of the scrubber along at least a part of that upper edge. Thus, a circuitous path will be created alternately above and below the baffle plates, bounded at the top by the roof section and at the bottom by the level of the fluid which cannot escape via the drain. Such a drain might comprise a conduit that extends upwardly through the floor, with an open end standing proud of the floor by the preset distance. The scrubber may be arranged so that the floor is inclined so that the drain is near the lowest part of the floor. Thus fluid from the nozzles (along with any admixed or dissolved matter) may be directed towards the drain. Such an arrangement may avoid build-up of unwanted admixed or dissolved matter, for example oils or soot.

In one form of the invention, the flow path of the scrubber can be generally upwards from a scrubber inlet toward a scrubber outlet. The at least one baffle plates can then be located above the scrubber inlet; they may also comprise apertures defining a flow path that is non-aligned with the scrubber inlet. The spray nozzles are then preferably provided on an underside of the or each baffle plate, and are preferably directed in a downwards direction.

The fluid should be one that is compatible with a waste water outlet in order to allow it to be flushed away after use. Water is a convenient choice as a base; we find that a weak solution of a detergent composition in water is ideal.

The non-straight flow path can be achieved in a variety of ways, such as an alternate up/down path created by baffle plates as set out above or in other ways such as a side-to-side path or a path contained within a non-straight conduit.

The flow path also preferably includes at least one filter, as a further check against release of particulates. This is ideally located after the spray nozzle or nozzles so as to reduce the particulate load on the filter. A convenient arrangement is for the scrubber to comprise a housing divided longitudinally by a dividing wall, the housing having an inlet located on one side of the dividing wall, and an aperture in the dividing wall, wherein the inlet receives gas flow from the vent, the disrupted flow path leads from the inlet to the aperture, and the filter is located on the opposite side of the dividing wall. This provides a particularly compact unit.

### BRIEF DESCRIPTION OF THE DRAWINGS

An embodiment of the present invention will now be described by way of example, with reference to the accompanying figures in which;
Figure 1 shows a view of a materials recycling apparatus according to the present invention;
Figure 2 shows a view of the scrubber of figure 1;
Figure 3 shows a view of the scrubber of figure 3, from one end;
Figure 4 shows a section on IV-IV of figure 3;
Figure 5 shows a section on V-V of figure 3;
Figure 6 shows an end view of a first alternative form of scrubber for use with the apparatus of figure 1;
Figure 7 shows a section on VII-VII of figure 6;
Figure 8 shows a section on VIII-VIII of figure 6;
Figure 9 shows an end view of a second alternative form of scrubber for use with the apparatus of figure 1;
Figure 10 shows a section on X-X of figure 9;
Figure 11 shows an end view of a third alternative form of scrubber for use with the apparatus of figure 1;
Figure 12 shows a section on XII-XII of figure 11
Figure 13 shows an end view of a fourth alternative form of scrubber for use with the apparatus of figure 1;
Figure 14 shows a section on XIV-XIV of figure 13;
Figure 15 shows an end view of a fifth alternative form of scrubber for use with the apparatus of figure 1;
Figure 16 shows a section on XVI-XVI of figure 15;
Figure 17 shows a vertical section through a sixth alternative form of scrubber for use with the apparatus of figure 1;
Figures 18, 19 and 20 show sectional, top and side views (respectively) of the separation plates of the scrubber of figure 17; and
Figures 21, 22 and 23 show top, side and frontal views of the collector plate of the scrubber of figure 17.

### DETAILED DESCRIPTION OF THE EMBODIMENTS

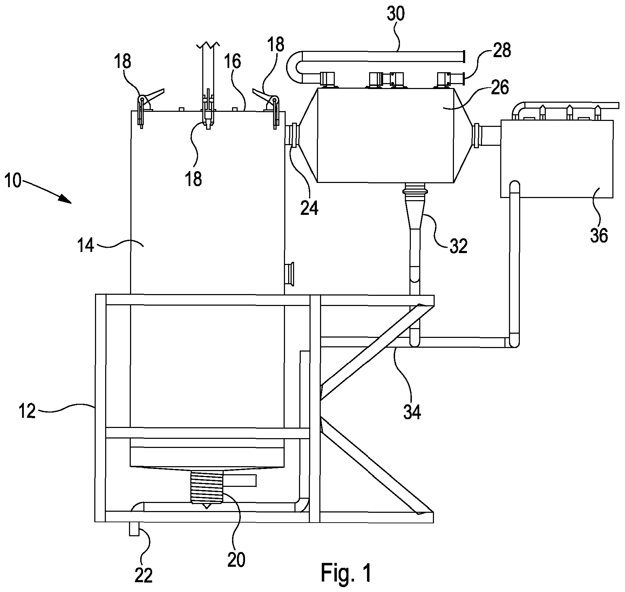

Figure 1 illustrates a general layout of the materials recycling apparatus 10 according to the present invention. This comprises a frame 12 securely attached to the ground or a suitable substrate (not shown) and which supports a heat treatment chamber 14 in which the high-temperature treatment of material is conducted in order to pyrolise or otherwise treat the material. The interior of the chamber is accessed via a removable lid 16 which is kept securely closed during operation by latches 18. A drain 20 at the base of the chamber 14 can be opened (selectively) to allow the interior of the chamber 14 to be flushed (e.g. with water) after a heat treatment. The flush water then escapes via a drain hose 22.

Towards the upper end of the chamber 14, a selectively-openable exhaust port 24 allows the interior of the chamber 14 to be vented after a heat treatment. A corresponding inlet (not shown) allows cool air in to displace the hot atmosphere within the chamber 14. After leaving via the exhaust 24, the hot air enters a heat exchanger 26 which transfers the heat of the exhaust gas to water from a hot water storage tank (not shown) which is pumped to the heat exchanger via an inlet pipe 28 and back to the hot water tank via an outlet pipe 30. Thus, the process heat is reclaimed and is available subsequently in the form of a hot water supply to the premises. A condensate drain 32 for water collected within the heat exchanger from the exhaust gas is provided, and connects to the drain hose 22 via pipework 34. The cooled exhaust gases released by the heat exchanger 26 are then passed to a scrubber 36 before being released via a suitable flue.

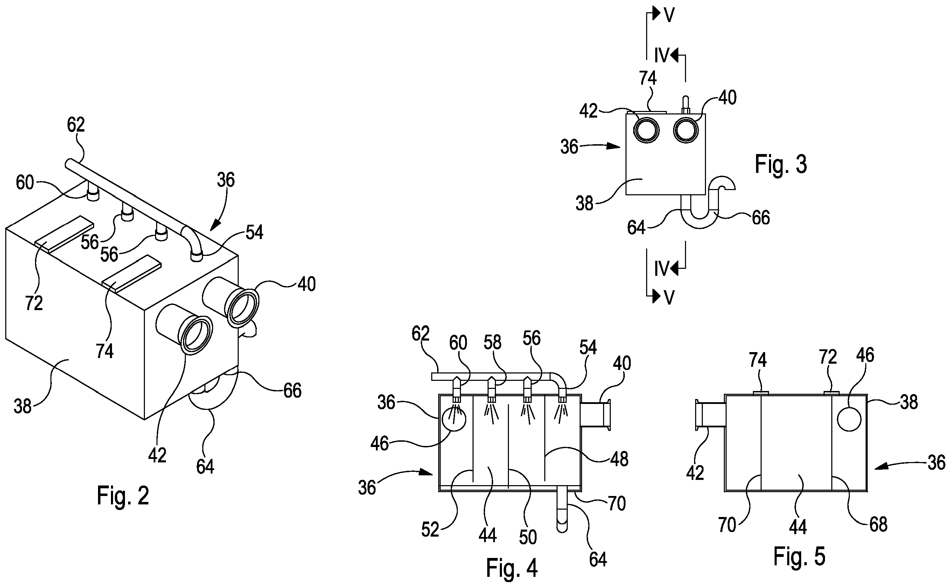

The scrubber 36 is shown in figures 2 to 5 inclusive. It comprises a generally cuboid housing 38, on one end face of which are an inlet aperture 40 and an outlet aperture 42 arranged side-by-side in the upper part of that end face. Within the interior of the cuboid shape, a dividing wall 44 is arranged vertically in order to separate the interior volume into first and second distinct spaces, one on either side of the interior volume. Thus, the inlet aperture 40 communicates with the first space whilst the outlet aperture 42 communicates with the second. An internal aperture 46 is provided in the dividing wall 44 to allow communication from the inlet aperture 40 to the outlet aperture 42; this is located on the dividing wall 44 toward the end face of the cuboid housing 38 that is distal from the inlet aperture 40 and outlet aperture 42. Thus the communication path involves travelling from the inlet aperture 40, along the length of the first interior space, through the internal aperture 46, and along the length of the second interior space to the exhaust aperture 42.

Within the first interior space there are three internal baffle plates 48, 50, 52. The first internal baffle plate 48 extends downwardly from the upper roof section of the first interior space, proximate the inlet aperture 40, but ends short of the lower floor section of the interior space. Thus, gases entering the first interior space via the inlet aperture 40 (at the upper end of the housing 38) must first travel downward in order to pass under the first baffle plate 48. The second baffle plate 50 is located after the first baffle plate 48 and also extends generally vertically, but has a space between it and both the roof and floor sections. The gap between the second baffle plate 50 and the roof section is generally the same as that between the first baffle plate 48 and the floor section and allows gases to flow past. The gap between the second baffle plate 50 and the floor section is less than that between the first baffle plate 48 and the floor section, and is sealed against gas flow as will be described later.

Finally, the third internal baffle plate 52 lies behind the second internal baffle plate 50 and, like the first internal baffle plate 48 it extends downwardly from the roof section towards the floor but with a gap between it and the floor section. The gap is similar to that that between the first internal baffle plate 48 and the floor, and more than that between the second internal baffle plate 50 and the floor. Thus, in use a gas must flow downwardly to pass below the first internal baffle plate 48, then upwardly to pass above the second internal baffle plate 50, then downwardly to pass below the third internal baffle plate 52, then upwardly to reach the internal aperture 46 and enter the second interior space.

A total of four spray nozzles 54, 56, 58, 60 are set into the roof section of the housing 38 and create a downwardly-directed fine spray within the first interior space. They are supplied with liquid by a supply pipe 62. The first nozzle 54 is located above and in front of the first internal baffle plate 48, and thus creates a spray between it and the inlet aperture 40. The second nozzle 56 is located above and between the first internal baffle plate 48 and the second internal baffle plate 50, and thus creates a spray between the two baffle plates. The third nozzle 58 is likewise located above and between the second internal baffle plate 50 and the third internal baffle plate 52. Finally, the fourth nozzle 60 is located above and behind the third internal baffle plate 52. As a result, gas flowing along the circuitous path around the baffle plates is thoroughly doused with the spray, removing smoke particulates.

Alternatively, the spray nozzles may be provided in a side section of the housing to provide a horizontally-directed fine spray.

A scrubber drain 64 is provided in the floor section of the housing 38 and allows liquid from the nozzles to escape. This takes the form of a drain pipe leading to a U-bend formation 66. The drain pipe passes through the floor section of the housing 38 and has an open end 70 that is spaced from the floor section, i.e. the pipe 64 stands proud of the floor within the first interior space. Thus, the liquid must collect to a preset depth before it can escape via the drain 64. This preset depth, determined by the amount that the drain pipe 64 stands proud of the floor section, is set as being slightly greater than the spacing between the second internal baffle plate 50 and the floor but less than the spacing between the first and third internal baffle plates 48, 52 and the floor. Thus, the liquid in the base of the first interior space seals the lower end as the second internal baffle plate 50 as noted above, but allows gas flow past the first and third internal baffle plates 48, 52.

In practice, as will be illustrated, a larger or smaller number of nozzles and/or baffle plates can be provided, as necessary in view of the characteristics of the thermal treatment process in question.

The liquid supplied to the nozzles should be one that is compatible with a domestic waste water drain, so that it can be safely and legally flushed away. Water is a convenient choice, so water or a water-based composition will be ideal. We have found that a solution of a detergent composition is ideal. This reduces the surface tension in the liquid thereby allowing a finer spray that is more apt for collecting entrained particulates. It also assists in mixing the oily residues entrained in the exhaust gases with the water base, leaving an outflow that is easy to flush and which has less odour.

A suitable composition for this purpose is up to about 50ml of a domestic washing composition such as Persil® Bio Washing Powder (available from Unilever NV) per litre of water. We prefer a weak solution, however, as a concentration of around 20ml per litre or less is still effective and will consume less detergent. Higher concentrations will generally work, but are unnecessary and therefore wasteful. Other detergent compositions can be expected to work, but we especially prefer household detergents as they are tested and accepted in the home as a known product.

Figure 5 shows the second interior space, leading to the exhaust aperture 42. A pair of filters 68, 70 are provided within this space, of a suitable form and type, extending from the roof section to the floor section and thus requiring gas flowing through the second interior space to pass through the filters 68, 70. The filters 68, 70 extend through slots in the roof section and are held in place by T-section handles 72, 74, thus allowing them to be withdrawn for cleaning or replacement. Again, more or fewer filters could be provided as required and as will be described.

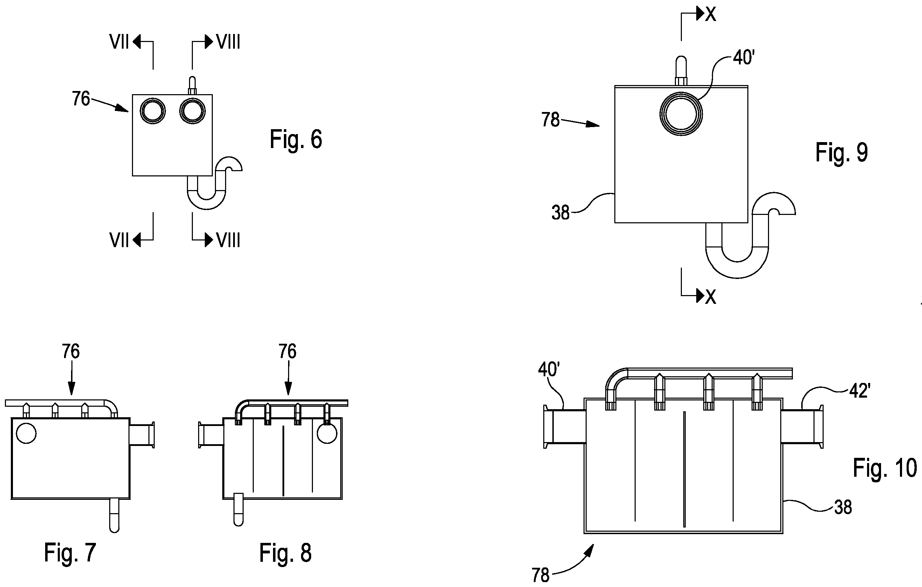

Figures 6 to 8 show a first alternative form of scrubber 76. This is essentially the same as the scrubber 36 of figure 2 to 5 but omits the filters 68, 70 in their entirety. It is suited to treatment apparatus whose characteristics are such, or which operate in areas where the typical materials being processed are such, that the particulates contained in the exhaust gas stream are substantially entirely removed by the sprays.

Figures 9 and 10 show a second alternative form of scrubber 78. This is akin to the first alternative 76 but also omits the internal dividing wall 44, and thus the baffle plates and sprays occupy the entire internal space within the housing 38. As a result, the exhaust aperture 42' is relocated to the rear face of the housing 38, distal from the inlet aperture 40'.

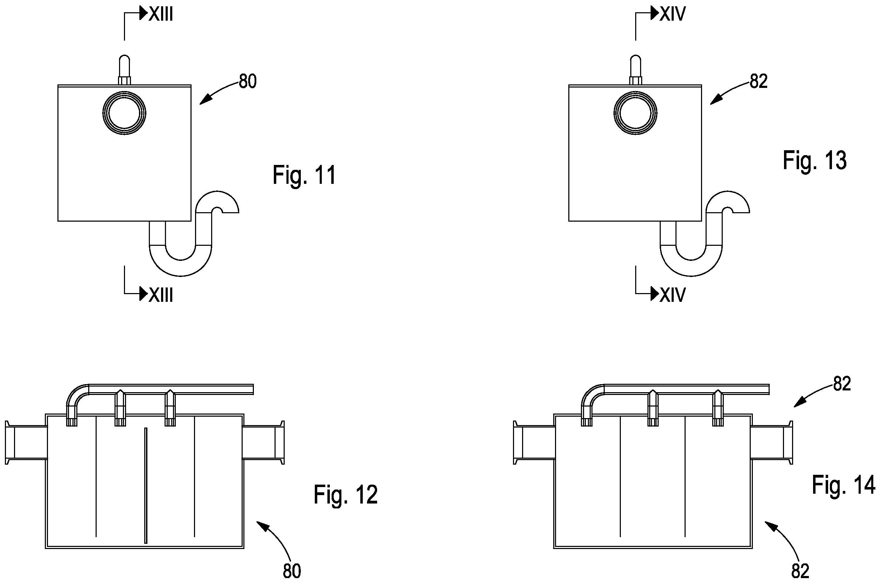

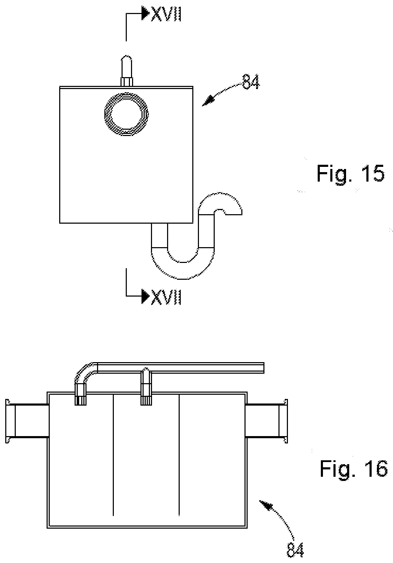

Figures 11 and 12 show a third alternative form of scrubber 80. This is akin to the second alternative 76 but also omits the last (fourth) spray nozzle 60. Figures 13 and 14 show a fourth alternative form of scrubber 82 which also omits the second baffle plate, with the first and third baffle plates and the first, second and third nozzles being relocated accordingly in order to maintain a substantially even spacing and pattern within the interior space. This arrangement no longer creates a circuitous path as such but still requires the gas flow to pass through several sprays. Finally, figures 15 and 16 show a fifth alternative form of scrubber 84 which omits the last nozzle. The skilled person will be able to select a suitable scrubber from the alternatives set out above (or variants thereon employing substantially the same principles) in the light of the characteristics of the exhaust gases in question.

In other variants, the scrubber unit can be mounted in other orientations. The above embodiments share a horizontal orientation but a vertical orientation is also possible and can be advantageous in slowing the passage of the smoke through the unit, giving the spray nozzles more time to work. In a vertical orientation, the drain is still located at the base but need not be designed so as to cover the base of any baffle plates.

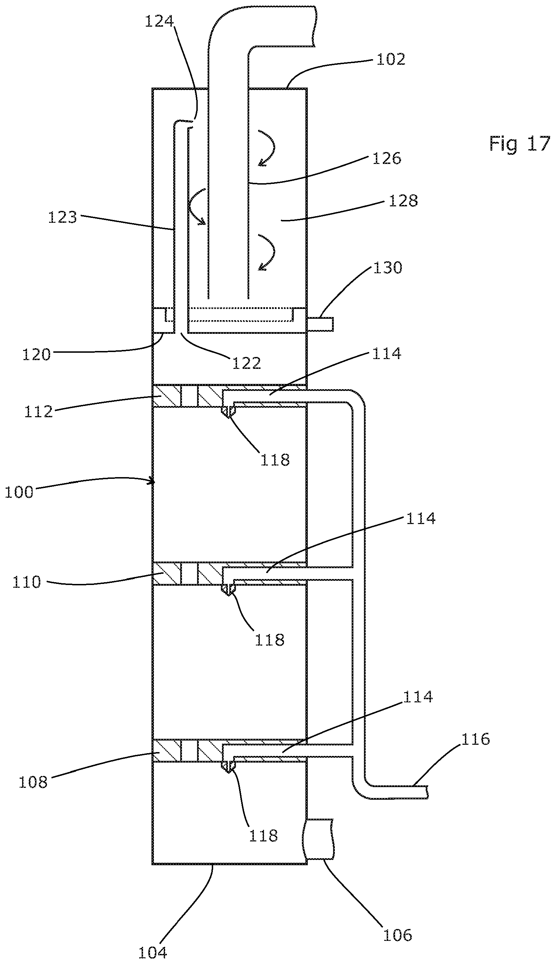

Figures 17 to 23 illustrate such a vertically-oriented scrubber. This provides essentially the same manner of scrubbing but in a vertically-oriented device. This may provide a packaging advantage in some designs. An elongate vertically-oriented cylinder 100 forms the main body of the scrubber, closed by upper and lower end caps 102, 104. A scrubber inlet 106 is provided on a cylindrical side near the base of the main body 100 and allows ingress of air to be cleaned. Incoming air is directed in a horizontal orientation by the inlet 106, and must then divert upwards to pass through the interior of the main body 100, thus disrupting the path of the airflow.

The upwardly-moving air must then pass through a series of three baffle plates 108, 110, 112. A greater or lesser number of baffle plates (for example one, two or four) could be provided but we find that three is a convenient number. Each contains a plurality of apertures, as will be explained below. The apertures can be located in the baffle plates so that they are not aligned with each other, thus forcing the airflow to adopt a disrupted path.

Each baffle plate 108, 110, 112 contains a fluid conduit 114 which is supplied by a fluid supply 116. The fluid conduit 114 leads to a spray nozzle 118 located on the underside of the baffle plate. This is directed downwards towards the airflow passing through the baffle plate. Thus, fluid from the supply 116 passes through the conduit and is sprayed into the oncoming airflow. The fluid may be as described above, i.e. water or water-based, such as a mild detergent solution.

In an alternative arrangement, the spray nozzles and/or the fluid supply and conduits may be separate from the baffle plates and mounted in the airflow.

After passing through the baffle plates, the airflow meets a collector plate 120. This has a single through-aperture 122 allowing the airflow to pass through upwards into an optional cyclone structure that is intended to remove entrained water and oils from the airflow. The through-aperture 122 leads to an upwardly-directed exhaust conduit 123 which ends with a nozzle 124 which directs the airflow tangentially around a central outlet pipe 126. This leads from a point just above the collector plate 120, upwards substantially concentrically within the main body 100, through the upper end cap 102 and away. It defines, together with the main body 100, an into which the airflow is directed, at an elevated flow rate due to the nozzle 124, in a tangential direction. This forces the airflow to adopt a helical flow path around the pipe 128 and downwardly along the annular passage 128. Eventually it reaches the base of the outlet pipe 126 just above the collector plate 120, from where it can escape via the pipe 126. The helical nature of the path will fling entrained water and oils out of the airflow, allowing them to drop into the collector plate, from which they can escape via a drain 130.

The cyclone structure, i.e. the collector plate 120 and the parts above it, is optional in that it can be omitted in favour of a cyclone located elsewhere, or an alternative structure, or a simple vent. Omitting this form of cyclone will reduce the overall height of the scrubber 100 and may therefore be advantageous, depending on the packaging limitations under which the overall apparatus needs to be designed. If omitted, a simple end cap with an exhaust aperture or conduit can be provided instead.

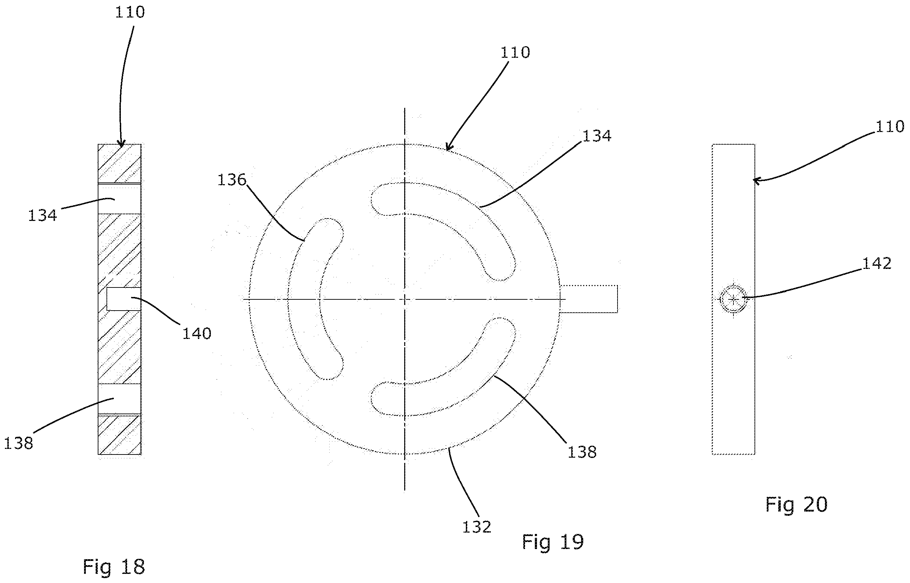

Figure 18 to 20 show a baffle plate in more detail, for example the middle baffle plate 110. This has a circular exterior profile 132, to fit snugly within the interior of the main body 100. A series of three part-circular apertures 134, 136, 138 are arranged concentrically on the baffle plate and together form an interrupted circular pattern. These allow airflow through the baffle plate albeit with some disruption. Also visible in the figures is a channel 140 into which the fluid conduit 114 can fit, leading to the spray nozzle 118 mounted at the centre of the lower face of the baffle plate, and an aperture 142 on the side edge of the baffle plate to allow the fluid conduit 114 to access the channel 140.

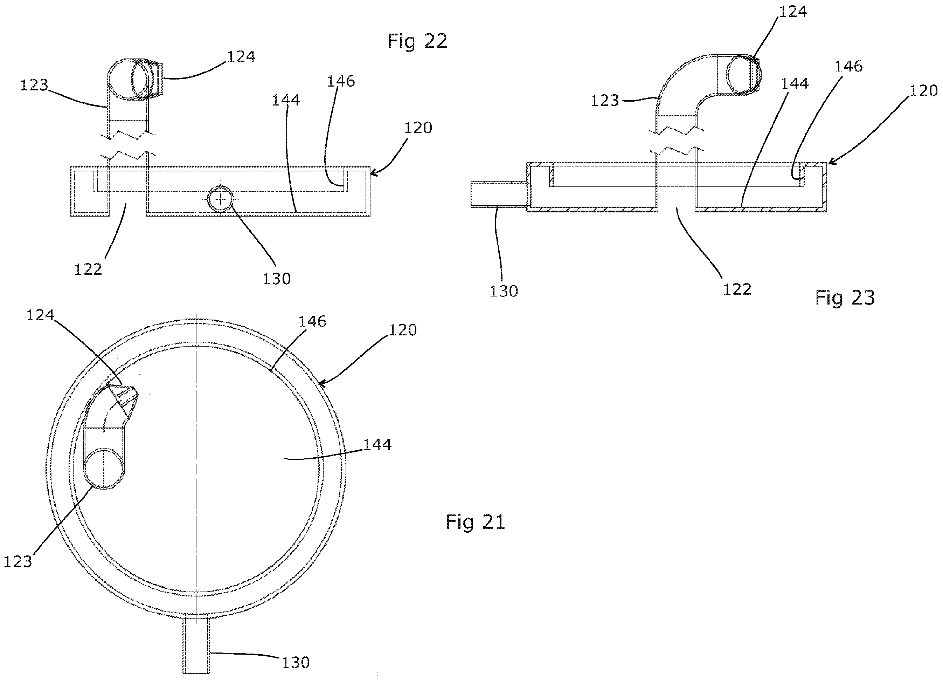

Finally, figures 21 to 23 show the collector plate 120. For convenience, the length of the exhaust conduit 123 is shown in truncated form, but the relative proportions are evident in figure 1. The collector plate 120 is in the form of a circular dish 144 sized to fit snugly within the main body 100 and with a lip 146 around its circumference to reduce fluid losses through splashing. The drain 130 extends radially outwardly and allows accumulated fluids (typically oil and water) harvested from the airflow via the cyclone structure to be removed for separation and disposal or re-use.

The exhaust conduit 123 extends from the floor of the collector plate 120 and upwardly so as to sit within the annular passage 128. It communicates with the space below the collector plate 120, to allow the airflow past the collector plate 120 but prevent fluid in the collector plate from draining downwardly. The upper end of the conduit 123 ends with a series of bends to direct the output substantially tangentially within the annular space 128; ideally it also directs the airflow roughly horizontally. A nozzle 124 at the end of the conduit 123 serves to accelerate the airflow and establish a cyclone effect within the annular space.

Also, the drains 64, 130 can direct liquid into a storage tank for the scrubber unit, with a pump that pumps the liquid (e.g. water with detergent) to the spray nozzles creating a closed circuit during use. When the scrubber cycle is complete, for example after one or more heat treatment cycles, the liquid can be disposed of. It can be released or pumped out of the tank and into the waste water outlet, or the storage tank can be manually removed and emptied. The tank can then be refilled with fresh liquid, either made up *ex tempore* or from a supply of premixed fluid.

## Claims

1. A materials recycling apparatus (10) comprising a heat treatment chamber (14) for processing the material at an elevated temperature, the chamber (14) having a vent (24) for exhaust air produced by the heat treatment which leads via a heat exchanger (26) to a scrubber (36, 100) comprising a non-straight flow path, at least one spray nozzle (54, 56, 58, 60, 118) directed towards the non-straight flow path, and a supply of liquid to the or each spray nozzle (54, 56, 58, 60, 118), thereby to remove byproducts of the heat treatment from the exhaust air.

2. A materials recycling apparatus according to claim 1 in which the flow path is disrupted by at least one baffle plate (48, 50, 52, 108, 110, 112).

3. A materials recycling apparatus according to claim 2 in which the spray nozzle (54, 56, 58, 60, 118) is located ahead of the baffle plate (48, 50, 52, 108, 110, 112).

4. A materials recycling apparatus according to claim 2 in which the spray nozzle (54, 56, 58, 60) is located above and in front of the baffle plate (48, 50, 52).

5. A materials recycling apparatus according to any one of claims 2 to 4 in which the scrubber (36) includes a floor section (70) below the flow path, and the lower edge of each baffle (48, 50, 52) is spaced from the floor section (70) along at least a part of that edge.

6. A materials recycling apparatus according to claim 5, further comprising a drain (64) allowing escape of the liquid from the scrubber (36) from a level which is a preset distance above the internal level of the floor (70), wherein the lower edges of the baffles (48, 50, 52) are spaced from the floor (70) by distances that are alternately greater than and less than the preset distance, and the baffles (50) whose lower edges are spaced from the floor (70) by less than the preset distance have an upper edge that is spaced from a roof section of the scrubber (36) along at least a part of that upper edge.

7. A materials recycling apparatus according to claim 1 in which the flow path of the scrubber is generally upwards from a scrubber inlet (106) toward a scrubber outlet (126).

8. A materials recycling apparatus according to claim 2 in which the flow path of the scrubber is generally upwards from a scrubber inlet (106) toward a scrubber outlet (126), and the at least one baffle plates (108, 110, 112) are located above the scrubber inlet (106).

9. A materials recycling apparatus according to claim 8 in which the baffle plates (108, 110, 112) comprise apertures (134, 136, 138) defining a flow path that is non-aligned with the scrubber inlet (106).

10. A materials recycling apparatus according to claim 8 or claim 9 in which the spray nozzles (118) are provided on an underside of the or each baffle plate (108, 110, 112).

11. A materials recycling apparatus according to any one of claims 7 to 10 in which the spray nozzles (118) are directed in a downwards direction.

12. A materials recycling apparatus according to any one of the preceding claims in which the liquid is water or water-based.

13. A materials recycling apparatus according to any one of the preceding claims in which the liquid is water containing a detergent composition.

14. A materials recycling apparatus according to any one of the preceding claims in which the flow path is disrupted in that it comprise a non-straight path.

15. A materials recycling apparatus according to any one of the preceding claims in which the scrubber (36) comprises a housing divided longitudinally by a dividing wall (44), the housing having an inlet (40) located on one side of the dividing wall (44), and an aperture (46) in the dividing wall (44), wherein the inlet (40) receives gas flow from the vent, the disrupted flow path leads from the inlet (40) to the aperture(46), and a filter (74) is located on the opposite side of the dividing wall (44).

## Patentansprüche

1. Vorrichtung für Materialrecycling (10), umfassend eine Wärmebehandlungskammer (14) zum Verarbeiten des Materials bei einer erhöhten Temperatur, wobei die Kammer (14) eine Entlüftungsöffnung (24) für durch die Wärmebehandlung erzeugte Abluft aufweist, die über einen Wärmetauscher (26) zu einem Wäscher (36, 100) führt, umfassend einen nicht-geraden Strömungspfad, zumindest eine Sprühdüse (54, 56, 58, 60, 118), die in Richtung des nicht-geraden Strömungspfads gerichtet ist, und eine Zufuhr von Flüssigkeit zu der oder zu jeder Sprühdüse (54, 56, 58, 60, 118), um so Nebenprodukte der Wärmebehandlung aus der Abluft zu entfernen.

2. Vorrichtung für Materialrecycling nach Anspruch 1, wobei der Strömungspfad durch zumindest ein Leitblech (48, 50, 52, 108, 110, 112) gestört wird.

3. Vorrichtung für Materialrecycling nach Anspruch 2, wobei die Sprühdüse (54 56, 58, 60, 118) dem Leitblech (48, 50, 52, 108, 110, 112) voraus befindlich ist.

4. Vorrichtung für Materialrecycling nach Anspruch 2, wobei die Sprühdüse (54 56, 58, 60) über und vor dem Leitblech (48, 50, 52) befindlich ist.

5. Vorrichtung für Materialrecycling nach einem der Ansprüche 2 bis 4, wobei der Wäscher (36) einen Bodenabschnitt (70) unter dem Strömungspfad umfasst und wobei die untere Kante jedes Leitblechs (48, 50, 52) vom Bodenabschnitt (70) entlang zumindest eines Teils dieser Kante beabstandet ist.

6. Vorrichtung für Materialrecycling nach Anspruch 5, ferner umfassend einen Ablauf (64), der Entweichen der Flüssigkeit aus dem Wäscher (36) von einem Niveau, das einen voreingestellten Abstand über dem internen Niveau des Bodens (70) ist, ermöglicht, wobei die unteren Kanten der Leitbleche (48, 50, 52) vom Boden (70) um Abstände beabstandet sind, die alternierend größer als und kleiner als der voreingestellte Abstand sind, und wobei die Leitbleche (50) deren untere Kanten um weniger als den voreingestellten Abstand vom Boden (70) beabstandet sind, eine obere Kante aufweisen, die von einem Dachabschnitt des Wäschers (36) entlang zumindest eines Teils dieser oberen Kante beabstandet ist.

7. Vorrichtung für Materialrecycling nach Anspruch 1, wobei der Strömungspfad des Wäschers im Allgemeinen von einem Wäschereinlass (106) nach oben hin zu einem Wäscherauslass (126) führt.

8. Vorrichtung für Materialrecycling nach Anspruch 2, wobei der Strömungspfad des Wäschers im Allgemeinen von einem Wäschereinlass (106) nach oben hin zu einem Wäscherauslass (126) führt und wobei das zumindest eine Leitblech (108, 110, 112) über dem Wäschereinlass (106) befindlich ist.

9. Vorrichtung für Materialrecycling nach Anspruch 8, wobei die Leitbleche (108, 110, 112) Öffnungen (134, 136, 138) umfassen, die einen Strömungspfad definieren, der nicht mit dem Wäschereinlass (106) ausgerichtet ist.

10. Vorrichtung für Materialrecycling nach Anspruch 8 oder Anspruch 9, wobei die Sprühdüsen (118) an einer Unterseite des oder jedes Leitblechs (108, 110, 112) bereitgestellt sind.

11. Vorrichtung für Materialrecycling nach einem der Ansprüche 7 bis 10, wobei die Sprühdüsen (118) in einer nach unten zeigenden Richtung gerichtet sind.

12. Vorrichtung für Materialrecycling nach einem der vorhergehenden Ansprüche, wobei die Flüssigkeit Wasser ist oder wasserbasiert ist.

13. Vorrichtung für Materialrecycling nach einem der vorhergehenden Ansprüche, wobei die Flüssigkeit Wasser ist, das eine Waschmittelzusammensetzung enthält.

14. Vorrichtung für Materialrecycling nach einem der vorhergehenden Ansprüche, wobei der Strömungspfad dahingehend gestört ist, dass er einen nicht-geraden Pfad umfasst.

15. Vorrichtung für Materialrecycling nach einem der vorhergehenden Ansprüche, wobei der Wäscher (36) ein Gehäuse umfasst, das längs durch eine Teilungswand (44) geteilt wird, wobei das Gehäuse einen Einlass (40), befindlich an einer Seite der Teilungswand (44), und eine Öffnung (46) in der Teilungswand (44) aufweist, wobei der Einlass (40) einen Gasstrom von der Entlüftungsöffnung aufnimmt, wobei der gestörte Strömungspfad vom Einlass (40) zur Öffnung (46) führt, und wobei ein Filter (74) auf der gegenüberliegenden Seite der Teilungswand (44) befindlich ist.

## Revendications

1. Appareil de recyclage de matériaux (10) comprenant une chambre de traitement thermique (14) destinée à traiter le matériau à une température élevée, la chambre (14) ayant une aération (24) pour l'air d'échappement produit par le traitement thermique qui conduit par le biais d'un échangeur de chaleur (26) à un épurateur (36, 100) comprenant un trajet d'écoulement non rectiligne, au moins une buse de pulvérisation (54, 56, 58, 60, 118) dirigée vers le trajet d'écoulement non rectiligne, et une alimentation en liquide vers la ou chaque buse de pulvérisation (54, 56, 58, 60, 118), ce qui permet de supprimer les sous-produits du traitement thermique de l'air d'échappement.

2. Appareil de recyclage de matériaux selon la revendication 1, dans lequel le trajet d'écoulement est interrompu par au moins une chicane (48, 50, 52, 108, 110, 112).

3. Appareil de recyclage de matériaux selon la revendication 2, dans lequel la buse de pulvérisation (54, 56, 58, 60, 118) est située devant la chicane (48, 50, 52, 108, 110, 112).

4. Appareil de recyclage de matériaux selon la revendication 2, dans lequel la buse de pulvérisation (54, 56, 58, 60) est située au-dessus et devant la chicane (48, 50, 52).

5. Appareil de recyclage de matériaux selon l'une quelconque des revendications 2 à 4, dans lequel l'épurateur (36) comprend une section plancher (70) sous le trajet d'écoulement, et le bord inférieur de chaque chicane (48, 50, 52) est espacé de la section plancher (70) le long d'au moins une partie de ce bord.

6. Appareil de recyclage de matériaux selon la revendication 5, comprenant en outre un drain (64) permettant l'évacuation du liquide depuis l'épurateur (36) depuis un niveau qui se trouve à une distance prédéfinie au-dessus du niveau interne du plancher (70), dans lequel les bords inférieurs des chicanes (48, 50, 52) sont espacés du plancher (70) de distances qui sont en alternance supérieures et inférieures à la distance prédéfinie, et les chicanes (50) dont les bords inférieurs sont espacés du plancher (70) de distances inférieures à la distance prédéfinie ont un bord supérieur qui est espacé d'une section toit de l'épurateur (36) le long d'au moins une partie de ce bord supérieur.

7. Appareil de recyclage de matériaux selon la revendication 1, dans lequel le trajet d'écoulement de l'épurateur est généralement vertical à partir d'une entrée (106) de l'épurateur en direction d'une sortie (126) de l'épurateur.

8. Appareil de recyclage de matériaux selon la revendication 2, dans lequel le trajet d'écoulement de l'épurateur est généralement vertical à partir d'une entrée (106) de l'épurateur en direction d'une sortie (126) de l'épurateur, et l'au moins une chicane (108, 110, 112) est située au-dessus de l'entrée (106) de l'épurateur.

9. Appareil de recyclage de matériaux selon la revendication 8, dans lequel les chicanes (108, 110, 112) comprennent des ouvertures (134, 136, 138) définissant un trajet d'écoulement qui n'est pas aligné sur l'entrée (106) de l'épurateur.

10. Appareil de recyclage de matériaux selon la revendication 8 ou la revendication 9, dans lequel les buses de pulvérisation (118) sont placées sur un dessous de la ou de chaque chicane (108, 110, 112).

11. Appareil de recyclage de matériaux selon l'une quelconque des revendications 7 à 10, dans lequel les buses de pulvérisation (118) sont orientées dans une direction descendante.

12. Appareil de recyclage de matériaux selon l'une quelconque des revendications précédentes, dans lequel le liquide est de l'eau ou est à base d'eau.

13. Appareil de recyclage de matériaux selon l'une quelconque des revendications précédentes, dans lequel le liquide est de l'eau contenant une composition détergente.

14. Appareil de recyclage de matériaux selon l'une quelconque des revendications précédentes, dans lequel le trajet d'écoulement est interrompu en ce qu'il comprend un trajet non rectiligne.

15. Appareil de recyclage de matériaux selon l'une quelconque des revendications précédentes, dans lequel l'épurateur (36) comprend un logement divisé longitudinalement par une paroi de division (44), le logement ayant une entrée (40) située sur un côté de la paroi de division (44), et une ouverture (46) dans la paroi de division (44), dans lequel l'entrée (40) reçoit un flux de gaz depuis l'aération, le trajet d'écoulement interrompu conduit de l'entrée (40) vers l'ouverture (46), et un filtre (74) est situé sur le côté opposé de la paroi de division (44).
